# EUROPEAN PATENT SPECIFICATION

(11) **EP 4 336 076 B1**
(45) Date of publication and mention of the grant of the patent: **12.11.2025**
(21) Application number: 22194600.7
(22) Date of filing: 08.09.2022
(51) Int. Cl.: F16K 31/04, F16K 37/00, F23D 14/60, F23N 1/02, H02P 8/00, F23K 5/00, F16K 3/02, F16K 3/34

(54) **SYSTEMS AND METHODS FOR MEASURING THROTTLE POSITION**
SYSTEME UND VERFAHREN ZUR MESSUNG DER DROSSELSTELLUNG
SYSTÈMES ET PROCÉDÉS POUR MESURER LA POSITION D'UNE VANNE

(43) Date of publication of application: 13.03.2024
(73) Proprietor: Pittway Sarl, 1180 Rolle (CH)
(72) Inventor: KRALICEK, Libor, 1180 Rolle (CH); LZICAR, Petr, 1180 Rolle (CH); MICHALEK, Dusan, 1180 Rolle (CH); MARTINIK, Ales, 1180 Rolle (CH)
(74) Representative: Murgitroyd & Company

(56) References cited:
- EP-A2- 2 407 696
- DE-A1- 102009 008 756
- DE-U1- 202013 105 011
- JP-A- 2003 074 743
- US-A1- 2017 292 698
- US-A1- 2020 182 375

## Description

### FIELD OF THE INVENTION

The present invention relates to methods and systems for measuring position of a throttle for use with a gas valve.

### BACKGROUND OF THE INVENTION

In a gas appliance such as a boiler (e.g. for producing hot water), gas is used as fuel which is combusted (burned) to produce heat. Prior to entering a combustion chamber of the appliance, gas is mixed with air. The air to gas ratio depends on many factors and needs to be regulated. Therefore, the amount of gas that enters the appliance needs to be regulated.

To facilitate the flow of gas into the combustion chamber and/or to adjust the air and gas ratio, a valve is provided. The valve comprises a throttle which is movable to open, partially open or close a gas passage. The valve thus regulates the gas that is let in the combustion chamber. The valve is usually provided with a stepper motor which is configured to move a throttle to open, partially open or close the valve. The stepper motor is usually provided with means for determining how many steps have been taken by the motor and subsequently determining the state of opening of the valve and therefore how much gas is let into the combustion area and/or how much gas is mixed with the air.

In certain situations, an error in the determination of the valve positioning may occur. For example, the stepper motor may miss a step but count the step as if it was not missed. In such a case, the valve opening determined by the steps taken by the stepper motor is no longer accurate. The amount of gas in the combustion chamber and /or the air to gas ratio are thus also no longer accurate.

There is a need for independent measurement and/or verification of the opening of the gas valve (the position of the throttle).

US 2020/182375 A1 describes a vacuum valve having a valve closure and having a drive unit which is coupled to the valve closure and which has at least one adjustment element. The vacuum valve furthermore has a position sensor, in particular a travel or distance sensor, such that a position of the valve closure and/or of the at least one adjustment element relative to a zero position, in particular an open position or closed position of the vacuum valve, can be measured.

JP 2003 074743 A describes a fluid interrupting device for opening/closing a passage formed in a device casing, by the valve element driven by a motor, the valve element position detecting mechanism is composed of a magnetic substance interlocked with the valve element; a coil disposed in an outside position of the passage and changed in inductance by the far and near distance of the magnetic substance; and an inductance detecting means for detecting the inductance of the coil. The position of the valve element is detected by the difference of the inductance.

US 2017/292698 A1 describes a method for determining a change in an operating condition of a gas burner appliance. In some instances, a calibration of a gas/air mixture may be performed when the combustion quality of the gas burner appliance diminishes. This may be accomplished by adjusting a throttle position of a throttle valve that throttles the gas to the gas burner appliance. After calibration has been performed, a throttle position of the throttle valve is determined, and based on the throttle position determined after calibration, a change of an operating condition of the gas burner appliance is detectable.

### SUMMARY OF THE INVENTION

The scope of the present invention is set out in the claims appended hereto.

### BRIEF DESCRIPTION OF THE DRAWINGS

Specific embodiments of the present invention will now be described, by way of example only, with reference to the accompanying drawings in which:
Figure 1 is a schematic view of an example appliance in which methods and systems for measuring position of a throttle may be employed;
Figure 2 is an isometric view of an example throttle;
Figure 3 is an isometric view of a part of an example throttle;
Figure 4 is a detail of a throttle opening;
Figure 5 is a detail of a throttle blade;
Figures 6a, 6b and 6c are details of the throttle opening opened, partially opened and closed, respectively;
Figure 7 is an isometric view of a detail of an example throttle according to a second embodiment.

### DETAILED DESCRIPTION

The below description is for illustration only, and is not intended to be limiting. Various elements of embodiments described below may be combined into a new embodiment, as appropriate.

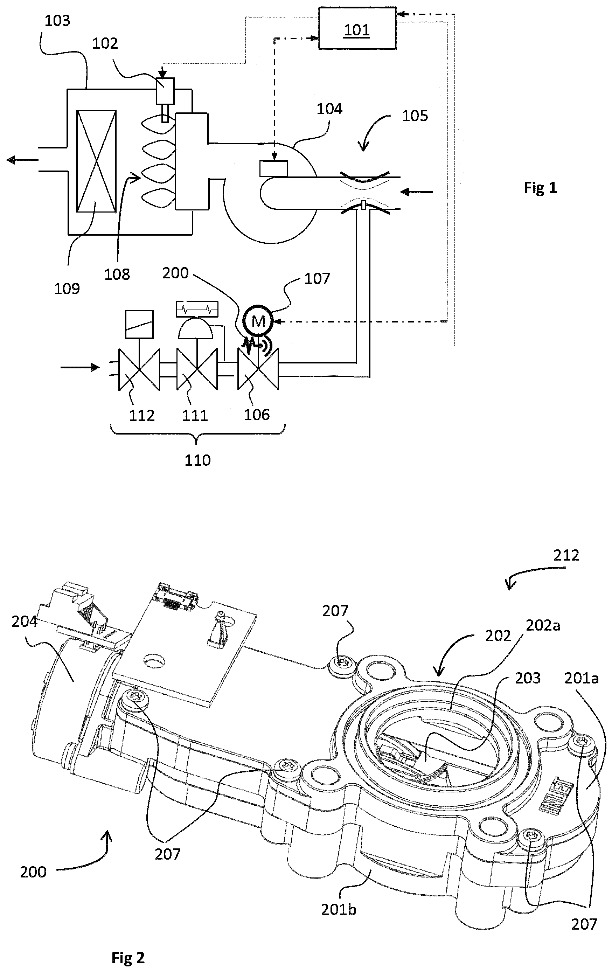

Fig 1 shows a schematic view of an example gas appliance 100. The appliance may be a boiler (a water heater) which combusts gas (e.g. natural gas or hydrogen) to produce heat.

In the example shown in the figures, Fig 1 shows the appliance comprising a controller 101, which is connected to various components of the appliance 100 and controls the various processes performed by these components. To this end, one or more sensors (not shown) may be provided to register various data and parameters mentioned below, and convey the registered information to the controller 101.

The appliance 100 comprises a combustion chamber 103. The combustion chamber 103 is a space into which fuel (usually mixed with air or other oxidizer) is supplied and in which heat is produced by combusting the fuel. The combustion chamber 103 comprises an igniter 102, which is connected to and controlled by the controller 101 and which initiates the fuel combustion. The example appliance of Fig 1 further comprises a fan 104, an air restrictor 105 and a pneumatic valve 110. The fan 104 serves to supply the mixture of air and fuel from a mixer (not shown) to the combustion chamber 103. The pneumatic valve 110 may comprise several components, for example a first valve 112, a servo valve 111 and a throttle valve 106. In an alternative embodiment (not shown), the throttle valve 106 may be positioned externally of the valve 110 (i.e. it may not be part of the valve 110 and/or may not be positioned within the same housing as the valve 110).

To achieve the correct air to gas ratio, both the flow of gas and the flow of air may be regulated. To this end, the throttle valve 106 is operable to allow or restrict flow of the fuel into the combustion chamber 103, and the fan 104 may be operable to regulate the amount of air. Alternatively or in addition, the air restrictor 105 may be operable to allow or restrict flow of air into the combustion chamber 103. The throttle valve 106 may be motorized, e.g. by means of a stepper motor, which opens, partially opens or closes the throttle valve 106. Similarly, the air restrictor 105 may be motorized. Together, the fan 104, the air restrictor 105 and the throttle valve 106 are operable to ensure a correct mixture of air and fuel in the combustion chamber 103. The air to fuel ratio is determined by the controller 101.

The extent to which the throttle valve 106 is opened is determined by the controller 101. This is based on various considerations such as how rich or lean the gas (fuel) is, how much air does the air restrictor 105 bring in, what is the desired speed and target temperature of the heated medium (e.g. water) and what are the desired combustion parameters. The controller 101 stores appropriate instructions for such determination.

To ensure that the throttle valve 106 is opened, partially opened or closed as determined by the controller 101, a gas valve throttle position measurement system 200 is provided. The throttle position measurement system 200 measures the position of the throttle 212 independently of the motor 107 provided to move the throttle 212. An example embodiment of the throttle position measurement system 200 is shown in Fig 2.

In the example shown in the figures, Fig 2 shows the throttle 212 comprising a housing 201. The housing may comprise two parts, a first part 201a and a second part 201b. Considering the orientation of the housing as shown in the Figures, the first part 201a will be referred to as a top part 201a and the second part 201b will the referred to as a bottom part 201b. In other embodiments, the housing 201 may be made of more parts than two, e.g. three. For example, there may be a top part, a middle part and a bottom part (not shown). In such case, some of the features of the top part and/or the bottom part may be provided on the middle part. In an embodiment, the housing 201 may be made of a single piece. In the following description, the housing 201 will be described as a two-piece housing. This is not intended to be limiting.

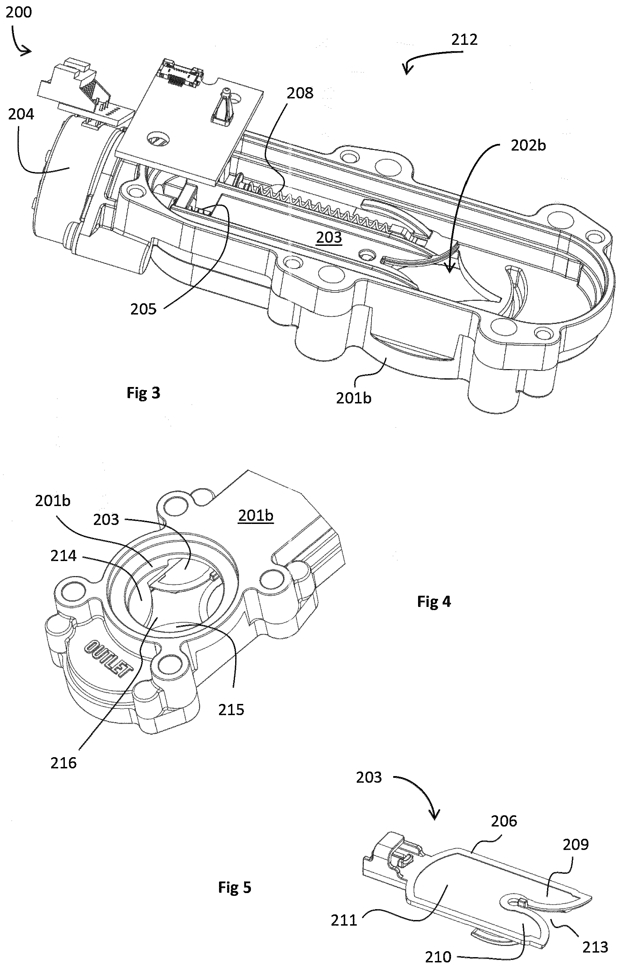

In the example embodiment, the housing 201 and more particularly both parts of the housing 201a-b comprise an opening 202, which may be opened, partially opened or closed by a blade 203 (shown in detail in Fig 5). The blade 203 is positioned within the housing 201 and is movable within the housing 201. The blade 203 may be positioned e.g. between the top part 201a and the bottom part 201b of the housing 201.

In the example embodiment, at least one part of the housing 201 comprises conductive material. For example, the top part 201a and/or the bottom part 201b may comprise or be made of conductive material. The conductive material may be provided in the form of a metal insert. The whole housing 201 (both parts 210a and 201b) may comprise or be made of conductive material. The conductive material may be e.g. metal.

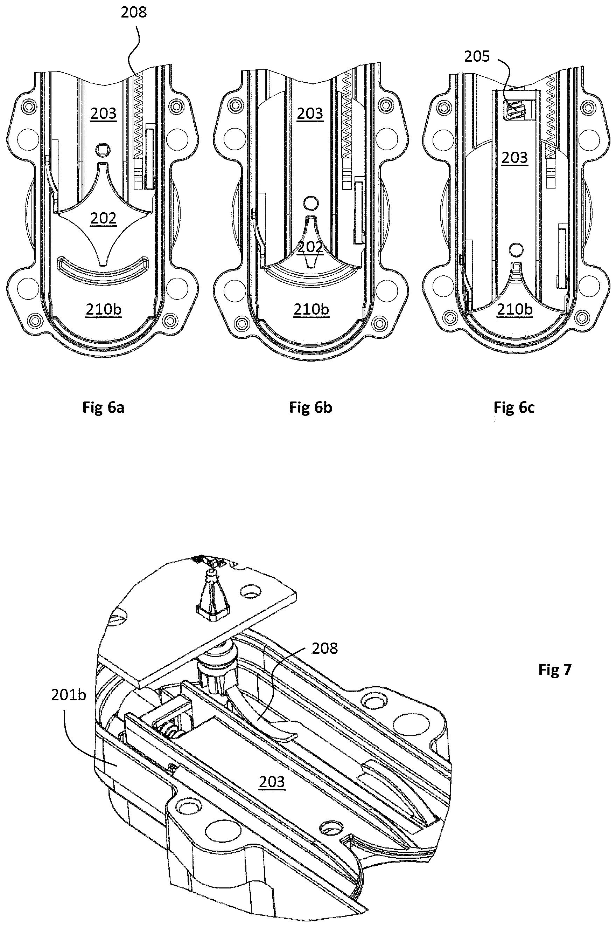

In the example embodiment, the blade 203 is connected to a motor 204, which is positioned outside of the housing 201. For example, the motor 204 may be connected to the blade 203 by a screw 205 (shown in Figs 3 and 6c). The screw 205 transfers the rotational movement of the motor 204 into a linear movement of the blade 203. Thus, the motor may move the blade 203 such that the blade 203 opens, partially opens or closes the opening 202.

The housing 201 may further comprise appropriate seals (not shown) and fastening elements 207. These features help to ensure the housing 201 stays assembled and air-tight.

Fig 3 shows the throttle 212 in a partially assembled state, with the top part 201a of the housing 201 removed. The elements shown in Fig 3 correspond to the elements shown in Fig 2.

As shown in Figs 3 and 6, the blade 203 of the example throttle 212 is movable along an axis of the housing 201 (e.g. the longitudinal axis of the housing). Example positions of the blade are shown in detail in Fig 6. As the blade 203 moves along the longitudinal axis of the housing 201, the blade 203 partially or completely obstructs opening 202. Fig 6a shows the opening fully open, Fig 6b shows the opening partially open, and Fig 6c shows the opening closed.

An example blade 203 is shown in detail in Fig 5. The blade 203 of Fig 5 comprises a base portion 211. In the example shown in the figures, the base portion 211 is solid. At the end of the base portion 211 that is adjacent the opening 202 when the throttle 212 is assembled, two protrusions 209 and 210 may be formed. The protrusions 209, 210 extend away from the base portion 211. As shown in Fig 5, the protrusions 209, 210 may be tapered towards their ends. The protrusions 209, 210 define a gap 213 between themselves. For example, the gap 213 may be a U-shaped or V-shaped gap. The gap 213 may be V-shaped with non-linear edges, e.g. convex or concave edges, in particular convex edges as shown in the Figures. The shape is described in more detail below. When the blade 203 moves within the housing 201, as the blade 203 progresses towards the opening 202 and progressively covers more of the opening 202, the V-shaped gap 213 progressively restricts the flow of fuel (e.g. gas) through the throttle 212.

The V-shaped gap 213 may have a specific profile. For example, as shown in Fig 5, the edges of the protrusions 209, 210 facing the gap 213 may each form a curve. The curve may be a part of a circle, oval or ellipse. The curve may be convex or concave. The edges of the protrusions 209, 210 facing the gap 213 may be arranged such that the shortest distance between the corresponding points on the edges may increase as a linear function of the distance from the base 211, as a quadratic function of the distance from the base 211, as exponential or logarithmic function of the distance from the base 211, and the like. In an embodiment shown in the Figures, the gap 213 is formed by protrusions 209, 210 that are formed with broadly oval (elliptic) edges.

The opening 202 may be formed as follows. The top part 201a of the housing 201 may have the opening 202a fully open, without any protrusions obstructing the flow of a medium through the opening 202a. The corresponding opening 202b in the bottom part 201b of the housing 201 may comprise a shape similar to the V-shaped gap 213 on the blade 203. For example, the bottom part 201b may comprise protrusions 214, 215 which face the protrusions 209, 210 of the blade 203 when the throttle 212 is in its assembled state. The protrusions 214, 215 provided on the bottom part 201b of the housing may have the same or similar shape to the protrusions 209, 210 of the blade 203.

Alternatively or in addition, protrusions corresponding to the protrusions 214, 215 may be formed in the top part 201a of the housing 201.

More generally, the opening 202 may comprise protrusions 214 and 215, which protrude towards the stepper motor 204 and partially cover the opening 202 and form between themselves a V-shaped gap 216 similar to the V-shaped gap 213 formed by the protrusions 209, 210 of the blade 203. The protrusions 214, 215 partially covering the opening 202 may be of similar shape to the protrusions 209, 210 of the blade 203. The protrusions 214, 215 partially covering the opening 202 may be of the same shape to the protrusions 209, 210 of the blade 203.

An example arrangement of the opening 201b is shown in Fig 4.

In the example embodiment, when the opening 202 is fully opened, the gap 213 between the blade protrusions 209, 210 and the gap 216 between the opening protrusions 214, 215 may face each other, with the vertex of the blade gap 213 facing the housing gap 216. Thus the opening 202 together with the blade 203, when fully opened (as shown e.g. in Fig 6a), may be substantially in a shape of diamond, a four-pointed star, or similar. As the opening 202 is gradually closed by the blade 203, the vertices of the blade gap 213 and the housing gap 216 get closer to each other.

The shape of the blade 203 and the protrusions 209, 210 the opening of the throttle 206 as described above provides a uniform one-step increase in the degree of opening the throttle 206. Each step of the motor increases flow by the same percentage. For example, the increase may be between 0.5% and 1%.

In other embodiments (not shown), the opening 202 in the housing 201 may not comprise the above-described protrusions 214 and 215. The opening 202 may have a different profile (with the protrusions and the gap between them arranged differently). Alternatively, there may be no profile at all (e.g. the opening may be simply circular or elliptical, it may be half-circle etc.).

The blade 203 comprises a conductive material. The blade 203 may be made of a conductive material. The blade 203 may be e.g. metal. In an embodiment, a strip 206 of non-conductive material (e.g. rubber or plastic) is provided along the edge of the blade 203, to electrically insulate points of direct contact between the blade 203 and the housing 201.

The housing 201 or at least one of its parts (e.g. the top part 201a and/or the bottom part 201b) also comprises or is made of a conductive material. In the following, an embodiment of the throttle 212 will be described in which the whole housing (i.e. the top and bottom parts 201a-b) and the whole blade 203 (except the strip 206) are made of conductive material. It will be understood that the throttle 212 would work in a similar manner if only one of the top and bottom parts 201a-b comprised or was made of a conductive material and/or if only a part of the blade 203 comprised or was made of a conductive material (e.g. if only the protrusions 209, 210 comprised or was made of a conductive material).

As both the blade 203 and the housing 201 are made of a conductive material, the blade 203 and the housing 201 together act as a capacitor. The capacitance of such capacitor depends on the area of the blade 203 overlapping the housing 201. In other words, it depends on to which extent the opening 202 is opened / partially opened / closed.

When the blade 203 moves to open or restrict the flow of fuel through the throttle 212, the position of the base 211 of the blade 203 and of the protrusions 209, 210 changes with respect to the housing 201 and the protrusions 214, 215. The capacitance of the capacitor formed by the blade 203 and the housing 201, which depends on the overlapping area of the blade 203 and the housing 201 thus also changes. The capacitance of the capacitor formed by the blade 203 and the housing 201 is representative of the state of opening of the throttle 212 and how much fuel is allowed to flow through the throttle 212. The above-described change in capacitance of the capacitor formed by the blade 203 and the housing 201 is representative of a change in position of the throttle. Therefore, the change in capacitance of the capacitor formed by the blade 203 and the housing 201 is representative of a change in the quantity of fuel flowing through the throttle 212.

A specific shape of the blade 203 and/or the specific shape of the opening 202 (and in particular the opening 202b formed in the bottom part 201a of the housing 201) may provide required opening characteristics, in particular a constant or near-constant percentage increase.

To ensure signal transfer from the blade 203 to the controller 101, an elastic member 208 is provided. The elastic member 208 may be e.g. a spring, more particularly a coil spring 208 (shown e.g. in Figs 3 and 6) or a pre-tensioned tongue 208 (shown in Fig 7). The elastic member 208 may provide tension and thus ensure improved contact between the blade 203 and the controller 101. The elastic member 208 may provide tension along the longitudinal axis of the housing 201 (e.g. as shown in Figs 3 and 6). Alternatively or in addition, the elastic member 208 may provide tension perpendicular to the longitudinal axis of the housing 201 (e.g. as shown in Fig 7). The elastic member 208 in the form of a pre-tensioned tongue 208 particularly improves the contact between the blade 203 and the elastic member 208, and therefore also the connection to the controller 101 and stabilizes the capacitance feedback.

Determining the extent to which the opening 202 in the throttle 212 is opened from the above-described measurement of capacitance may be advantageous in particular in situations where flame ionization measurement is not feasible and/or where there is a requirement for more than one throttle settings. For example, to initiate combustion, different appliances may require different air to gas ratio, and if such appliance does not have combustion sensor, precise throttle position sensor is advantageous for safe operation as a safety loop.

A particular application may be when the gas is hydrogen. In appliances combusting hydrogen, the methods based on detecting flame and/or ionization do not work, and the system described above therefore represents an independent way of verifying the air to gas ratio.

## Claims

1. A system (200) for measuring a position of a throttle (212), comprising:
the throttle (212), arranged to adjust the flow of a gas;
a stepper motor (107) connected to the throttle (212) by a connecting member, the stepper motor (107) being arranged to move the connecting member and the throttle (212);
the throttle (212) comprising:
a moveable blade (203), arranged to be movable together with the connecting member; and
a throttle housing (201), arranged such that the movement of the moveable blade (203) relative to the throttle housing (201) changes an electrical parameter representative of the position and/or movement of the throttle (212), wherein the moveable blade (203) together with the throttle housing (201) act to open, partially open or close the throttle (212);
**characterised in that** both the moveable blade (203) and the throttle housing (201) comprise an electrically conductive material, **in that** the moveable blade (203) and the throttle housing (201) together act as a capacitor whose capacitance depends on the area of the moveable blade (203) overlapping the housing (201), and **in that** the system (200) comprises a controller (101) configured to register a change in said capacitance caused by the relative movement of the moveable blade (203) and the throttle housing (201), and determine, based on the change in said capacitance, the change in position of the throttle (212).

2. The system (200) of claim 1, wherein the moveable blade (203) comprises an electrically insulating material.

3. The system (200) of any one of the preceding claims, wherein the system (200) further comprises an elastic member (208) to aid a signal transfer from the moveable blade (203) to the controller (101).

4. The system (200) of claim 3, wherein the elastic member (208) is a spring.

5. The system (200) of claim 3 or claim 4, wherein the spring is a pre-tensioned elastic tongue.

6. The system (200) of any one of the preceding claims, which has an insulated reference electrode positioned inside the throttle housing (201).

7. A method of measuring a position of a throttle (212) in a gas appliance, the gas appliance comprising the system (200) of claim 1, the method comprising:
moving, by the stepper motor (107), the moveable blade (203) relative to the throttle housing (201);
registering, by the controller (101), a change in the capacitance caused by the relative movement of the moveable blade (203) and the throttle housing (201); and
determining, based on the change in the capacitance, the change in position of the throttle (212).

## Patentansprüche

1. Ein System (200) zum Messen einer Position einer Drossel (212), beinhaltend:
die Drossel (212), die angeordnet ist, um den Fluss eines Gases einzustellen;
einen Schrittmotor (107), der durch ein Verbindungselement mit der Drossel (212) verbunden ist, wobei der Schrittmotor (107) angeordnet ist, um das Verbindungselement und die Drossel (212) zu bewegen;
wobei die Drossel (212) Folgendes beinhaltet:
ein bewegliches Blatt (203), das angeordnet ist, um zusammen mit dem Verbindungselement beweglich zu sein; und
ein Drosselgehäuse (201), das so angeordnet ist, dass die Bewegung des beweglichen Blatts (203) relativ zu dem Drosselgehäuse (201) einen elektrischen Parameter ändert, der für die Position und/oder Bewegung der Drossel (212) repräsentativ ist, wobei das bewegliche Blatt (203) zusammen mit dem Drosselgehäuse (201) wirkt, um die Drossel (212) zu öffnen, teilweise zu öffnen oder zu schließen;
**dadurch gekennzeichnet, dass** sowohl das bewegliche Blatt (203) als auch das Drosselgehäuse (201) ein elektrisch leitfähiges Material beinhalten, dass das bewegliche Blatt (203) und das Drosselgehäuse (201) zusammen als ein Kondensator wirken, dessen Kapazität von dem Bereich des beweglichen Blatts (203) abhängt, der das Gehäuse (201) überlappt, und dass das System (200) eine Steuerung (101) beinhaltet, die konfiguriert ist, um eine Änderung der Kapazität zu registrieren, die durch die relative Bewegung des beweglichen Blatts (203) und des Drosselgehäuses (201) verursacht wird, und basierend auf der Änderung der Kapazität die Änderung der Position der Drossel (212) zu bestimmen.

2. System (200) gemäß Anspruch 1, wobei das bewegliche Blatt (203) ein elektrisch isolierendes Material beinhaltet.

3. System (200) gemäß einem der vorhergehenden Ansprüche, wobei das System (200) ferner ein elastisches Element (208) beinhaltet, um eine Signalübertragung von dem beweglichen Blatt (203) zu der Steuerung (101) zu unterstützen.

4. System (200) gemäß Anspruch 3, wobei das elastische Element (208) eine Feder ist.

5. System (200) gemäß Anspruch 3 oder Anspruch 4, wobei die Feder eine vorgespannte elastische Zunge ist.

6. System (200) gemäß einem der vorhergehenden Ansprüche, das eine isolierte Referenzelektrode aufweist, die innerhalb des Drosselgehäuses (201) positioniert ist.

7. Ein Verfahren zum Messen einer Position einer Drossel (212) in einem Gasgerät, wobei das Gasgerät das System (200) gemäß Anspruch 1 beinhaltet, wobei das Verfahren Folgendes beinhaltet:
Bewegen, durch den Schrittmotor (107), des beweglichen Blatts (203) relativ zu dem Drosselgehäuse (201);
Registrieren, durch die Steuerung (101), einer Änderung der Kapazität, die durch die relative Bewegung des beweglichen Blatts (203) und des Drosselgehäuses (201) verursacht wird; und
Bestimmen, basierend auf der Änderung der Kapazität, der Änderung der Position der Drossel (212).

## Revendications

1. Un système (200) pour mesurer une position d'un étrangleur (212), comprenant :
l'étrangleur (212), agencé pour régler l'écoulement d'un gaz ;
un moteur pas à pas (107) raccordé à l'étrangleur (212) par un élément de raccordement, le moteur pas à pas (107) étant agencé pour mouvoir l'élément de raccordement et l'étrangleur (212) ;
l'étrangleur (212) comprenant :
une lame mobile (203), agencée pour être mobile conjointement avec l'élément de raccordement ; et
un boîtier d'étrangleur (201), agencé de telle sorte que le mouvement de la lame mobile (203) par rapport au boîtier d'étrangleur (201) change un paramètre électrique représentatif de la position et/ou du mouvement de l'étrangleur (212), dans lequel la lame mobile (203) conjointement avec le boîtier d'étrangleur (201) agissent pour ouvrir, partiellement ouvrir ou fermer l'étrangleur (212) ;
**caractérisé en ce que** la lame mobile (203) et le boîtier d'étrangleur (201) comprennent tous deux un matériau électriquement conducteur, **en ce que** la lame mobile (203) et le boîtier d'étrangleur (201) agissent conjointement comme condensateur dont la capacité dépend de la zone de la lame mobile (203) chevauchant le boîtier (201), et **en ce que** le système (200) comprend un dispositif de commande (101) configuré pour enregistrer un changement dans ladite capacité provoqué par le mouvement relatif de la lame mobile (203) et du boîtier d'étrangleur (201), et déterminer, sur la base du changement dans ladite capacité, le changement dans la position de l'étrangleur (212).

2. Le système (200) de la revendication 1, dans lequel la lame mobile (203) comprend un matériau électriquement isolant.

3. Le système (200) de l'une quelconque des revendications précédentes, le système (200) comprenant en outre un élément élastique (208) pour faciliter un transfert de signal de la lame mobile (203) au dispositif de commande (101).

4. Le système (200) de la revendication 3, dans lequel l'élément élastique (208) est un ressort.

5. Le système (200) de la revendication 3 ou de la revendication 4, dans lequel le ressort est une languette élastique précontrainte.

6. Le système (200) de l'une quelconque des revendications précédentes, qui a une électrode de référence isolée positionnée à l'intérieur du boîtier d'étrangleur (201).

7. Un procédé de mesure d'une position d'un étrangleur (212) dans un appareil d'utilisation du gaz, l'appareil d'utilisation du gaz comprenant le système (200) de la revendication 1, le procédé comprenant :
le fait de mouvoir, par le moteur pas à pas (107), la lame mobile (203) par rapport au boîtier d'étrangleur (201) ;
le fait d'enregistrer, par le dispositif de commande (101), un changement dans la capacité provoqué par le mouvement relatif de la lame mobile (203) et du boîtier d'étrangleur (201) ; et
le fait de déterminer, sur la base du changement dans la capacité, le changement dans la position de l'étrangleur (212).
